# EUROPEAN PATENT APPLICATION

(11) **EP 4 195 350 A1**
(43) Date of publication of application: **14.06.2023**
(21) Application number: 21911608.4
(22) Date of filing: 24.12.2021
(51) Int. Cl.: H01M 10/0565, H01M 10/0567, H01M 10/052

(54) **COMPOSITION FOR ELECTROLYTE OF LITHIUM SECONDARY BATTERY, GEL POLYMER ELECTROLYTE AND LITHIUM SECONDARY BATTERY COMPRISING SAME**

(30) Priority: 24.12.2020 KR 20200183054
(71) Applicant: LG Energy Solution, Ltd., Seoul 07335 (KR)
(72) Inventor: SHIN, Won Kyung, Daejeon 34122 (KR); LEE, Chul Haeng, Daejeon 34122 (KR); AHN, Kyoung Ho, Daejeon 34122 (KR); KIM, Min Jung, Daejeon 34122 (KR); LEE, Won Tae, Daejeon 34122 (KR); JI, Su Hyeon, Daejeon 34122 (KR)
(74) Representative: Hoffmann Eitle
(86) International application number: PCT/KR2021/019819
(87) International publication number: WO 2022/139543

(57) **Abstract**

The present invention relates to a composition for an electrolyte of a lithium secondary battery, a gel polymer electrolyte including a polymerization product thereof, and a lithium secondary battery including the gel polymer electrolyte, the composition including a lithium salt, a polyalkylene carbonate-based first polymer having a weight average molecular weight of 1,000 g/mol to 1,500,000 g/mol, a polypropylene carbonate-based second polymer including a unit represented by Formula 2 and having a weight average molecular weight of 200 g/mol to 1,000 g/mol, and an organic solvent, wherein the weight average molecular weight of the second polymer is in a range of 1/3,000 to 1/3 of the weight average molecular weight of the first polymer, and the amount of the first polymer is in a range of 0.1 wt% to 30 wt% based on the total weight of the composition.

## Description

### TECHNICAL FIELD

This application claims priority from Korean Patent Application No. 10-2020-0183054, filed on December 24, 2020, the disclosures of which are incorporated herein in its entirety.

The present invention relates to a composition for an electrolyte of a lithium secondary battery, a gel polymer electrolyte including a polymerization product thereof, and a lithium secondary battery including the gel polymer electrolyte.

### BACKGROUND ART

The application of a lithium secondary battery, which uses a principle in which electricity is generated or consumed by an oxidation/reduction reaction caused by intercalation and de-intercalation of lithium ions in a negative electrode and a positive electrode, is rapidly expanding not only as a portable power source for a mobile phone, a notebook computer, a digital camera, a camcorder, and the like but also as a medium-and-large-sized power source for a power tool, an electric bicycle, a hybrid electric vehicle (HEV), a plug-in HEV (PHEV), and the like. In accordance with the expansion of the application fields and the increase in demand thereof, the external shape and size of the battery are variously changed, and performance and stability which are more excellent than those required in conventional small batteries are required.

An ion conductive non-aqueous electrolyte solution in which a salt is dissolved in a non-aqueous organic solvent is mainly used, but the non-aqueous electrolyte solution has a disadvantage in that there is a high possibility that an electrode material is deteriorated and an organic solvent is volatilized and in that safety is low due to combustion caused by an increase in ambient temperature and the temperature of a battery itself.

Accordingly, there is a demand for the development of an electrolyte for a lithium secondary battery in which both performance and safety are ensured by compensating for these shortcomings.

### DISCLOSURE OF THE INVENTION

### TECHNICAL PROBLEM

An aspect of the present invention provides a composition for an electrolyte of a lithium secondary battery with improved lifespan properties and safety, a gel polymer electrolyte including a polymerization product thereof, and a lithium secondary battery including the gel polymer electrolyte.

### TECHNICAL SOLUTION

According to an aspect of the present invention, there is provided a composition for an electrolyte of a lithium secondary battery, the composition including a lithium salt,
a polyalkylene carbonate-based first polymer having a weight average molecular weight of 1,000 g/mol to 1,500,000 g/mol,
a polypropylene carbonate-based second polymer including a unit represented by Formula 2 and having a weight average molecular weight of 200 g/mol to 1,000 g/mol, and
an organic solvent, wherein
the weight average molecular weight of the second polymer is in a range of 1/3,000 to 1/3 of the weight average molecular weight of the first polymer, and
the amount of the first polymer is in a range of 0.1 wt% to 30 wt% based on the total weight of the composition.

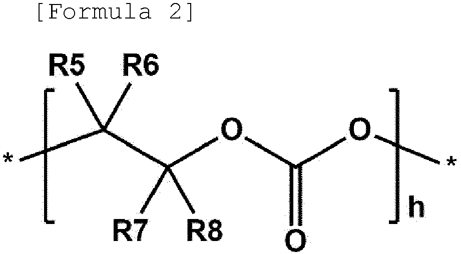

In the Formula 2,
R5 to R8 are the same as or different from each other and are each independently hydrogen, or an alkyl group having 1 to 5 carbon atoms, and at least one of R5 to R8 is an alkyl group having 1 to 5 carbon atoms,
* is a site connected to a main chain or an end group of a polymer, and
h is a repetition number and an integer of any one of 1 to 200.

According to another aspect of the present invention, there is provided a gel polymer electrolyte for a lithium secondary battery including a polymerization product of the composition for an electrolyte of a lithium secondary battery.

According to another aspect of the present invention, there is provided a lithium secondary battery including a positive electrode including a positive electrode active material, a negative electrode including a negative electrode active material, a separator interposed between the positive electrode and the negative electrode, and the gel polymer electrolyte for a lithium secondary battery.

### ADVANTAGEOUS EFFECTS

A composition for an electrolyte of a lithium secondary battery according to the present invention includes a polyalkylene carbonate-based polymer, and thus, may have improved wetting, and also includes a polypropylene carbonate(PPC)-based compound which has a lower molecular weight than that of the polymer, so that there is an effect of improving the safety of a battery due to the formation of Semi-IPN between the polymer and the compound.

### BEST MODE FOR CARRYING OUT THE INVENTION

Hereinafter, the present invention will be described in more detail.

Recently, in order to improve the performance and safety of a lithium secondary battery, an electrolyte in which the concentration of a lithium salt is increased or a solvent is changed is being developed. In the case of such an electrolyte, as viscosity and surface tension are increased, wetting with respect to an electrode including a polyolefin-based separator and a PVdF binder widely used in the art is reduced, so that activation process time increases in a manufacturing process of a battery, and a high-temperature aging step is added, which leads to a problem in that processing costs increase.

Therefore, the present inventors have tried to improve the wetting of a high concentration electrolyte by including a polyalkylene carbonate-based polymer which may serve as a surfactant for lowering surface tension in a composition for an electrolyte, and manufacturing an electrolyte therefrom.

However, when such a polymer is introduced, there is a problem in that a polymer matrix inhibits the movement of some lithium ions, resulting in lowering ion conductivity, so that the output of a battery is degraded. In order to solve the above problem, the present inventors have introduced a polypropylene carbonate(PPC)-based polymer which has a lower molecular weight than the polyalkylene carbonate-based polymer as an additive, and have found that the mobility of lithium ions in an electrolyte may be improved by lowering the rigidity of the polymer matrix through the high affinity with the polyalkylene carbonate-based polymer, a lithium salt, and an organic solvent, and that the interfacial properties (uniformity) and impregnation properties of electrode-electrolyte may be improved.

In addition, the present inventors have also found that due to the formation of a Semi-Inter-penetrating polymer network (IPN) between first and second polymers having different molecular weights, the durability to maintain a matrix structure is improved, so that a safety problem due to leakage is solved, and that effects such as low-temperature output improvement, oxidation stability improvement, and exothermic properties improvement are achieved.

In the present invention, unless otherwise stated, a molecular weight means a weight average molecular weight, and the weight average molecular weight is measured by Gel Permeation Chromatography (GPC). Specifically, the measurement was performed at a flow rate of 1.0 mL/min and a sample concentration of 1 mg/mL by using WATERS STYRAGEL HR3/HR4 (THF) as a column and tetrahydrofuran (THF) (used by filtering at 0.45 m) as a solvent. 100 µL of the sample was injected, and the column temperature was set to 40°C. Waters RI detector was used as a detector, and polystyrene (PS) was set as a standard. Data processing was performed through the Empower3 program.

A composition for an electrolyte of a lithium secondary battery of the present invention includes a lithium salt, a polyalkylene carbonate-based first polymer, a polypropylene carbonate(PPC)-based second polymer, and an organic solvent.

### (a) First polymer

In an embodiment of the present invention, the amount of the polyalkylene carbonate-based first polymer may be in a range of 0.1 wt% to 30 wt%, preferably 0.1 wt% to 20 wt%, most preferably 0.1 wt% to 5 wt% based on the total weight of the composition for an electrolyte of a lithium secondary battery. When the amount of the polyalkylene carbonate-based polymer is in the above range, it is preferable in terms of mechanical physical properties, ion conductivity, and viscosity. Specifically, when the amount of the polyalkylene carbonate-based polymer is less than 0.1 wt%, the input effect is insignificant, so that it is difficult to expect improvement in battery performance, and when greater than 30 wt%, the polymer in an excessive amount inhibits the activity of an electrode surface and makes it difficult to dissolve the lithium salt, so that it is unsuitable for use as an electrolyte for a lithium secondary battery.

In an embodiment of the present invention, the polyalkylene carbonate-based first polymer includes a unit represented by Formula 1 below.

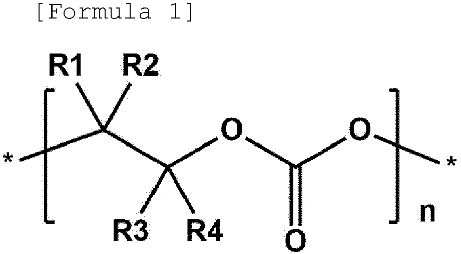

In the Formula 1,
R1 to R4 are the same as or different from each other and are each independently hydrogen, or an alkyl group having 1 to 5 carbon atoms,
* is a site connected to a main chain or an end group of a polymer, and
n is a repetition number and an integer of any one of 1 to 1,000.

Preferably, R1 to R4 of Formula 1 above may each be hydrogen.

In addition, preferably, the m may be an integer of any one of 1 to 500, and most preferably, an integer of any one of 1 to 200.

In an embodiment of the present invention, the first polymer may include a unit represented by Formula 3 below.

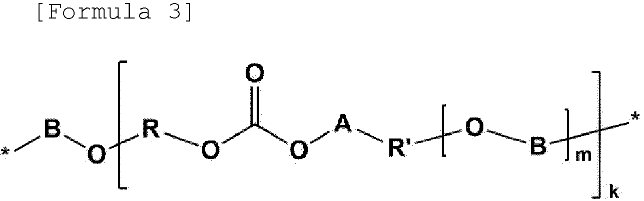

In the Formula 3,
R and R' are the same as or different from each other and are each independently an alkylene group having 1 to 5 carbon atoms,
A is the unit represented by the Formula 1,
B is a unit including one or more amide groups,
* is a site connected to a main chain or an end group of a polymer, and
m and k are repetition numbers, wherein
m is an integer of any one of 1 to 1,000, and
k is an integer of any one of 1 to 100.

The amide group means a group represented by

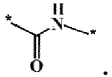

In an embodiment of the present invention, the B may be represented by Formula B-1.

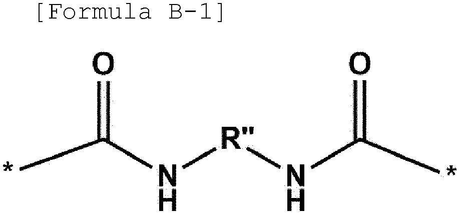

In the Formula B-1,
R" is a substituted or unsubstituted alkylene group having 1 to 10 carbon atoms, a substituted or unsubstituted cycloalkylene group having 3 to 10 carbon atoms, a substituted or unsubstituted bicycloalkylene group having 6 to 20 carbon atoms, or a substituted or unsubstituted arylene group having 6 to 20 carbon atoms.

Specifically, the R" may be any one selected from Formulas R"-1 to R"-6 below.

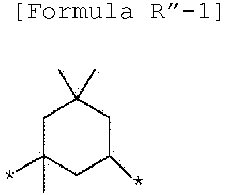

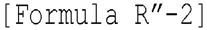

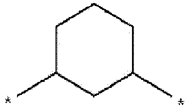

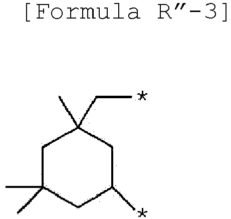

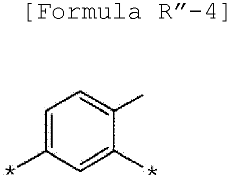

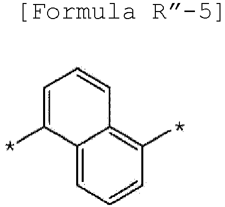

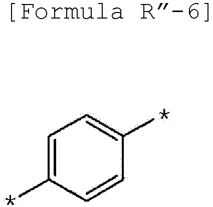

In the Formulas R"-1 to R"-6, * is a site connected to a main chain or an end group of a polymer.

Both end groups of the first polymer of the present invention are the same as or different from each other, and although not particularly limited, may be, for example, each independently an alkyl group, an alkoxy group, a hydroxyl group, an aldehyde group, an ester group, a halogen group, a halide group, a vinyl group, a (meth)acrylate group, a carboxyl group, a phenyl group, an amine group, an amide group, or a sulfonyl group. Specifically, the end group is a vinyl group or a (meth)acrylate group.

In addition, the end group may be represented by any one of Formulas E-1 to E-6 below. In this case, the end group may react with a polymerization initiator to cause a polymer cross-linking reaction.

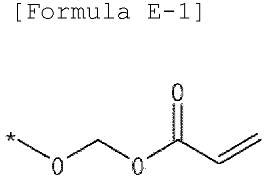

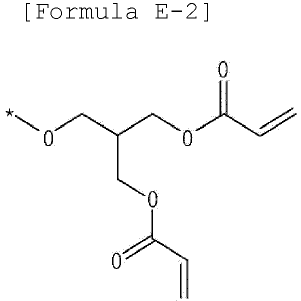

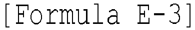

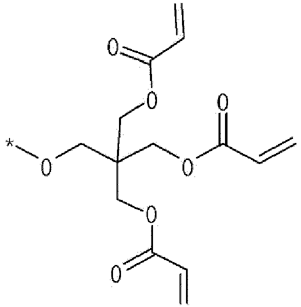

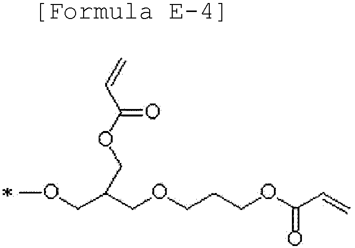

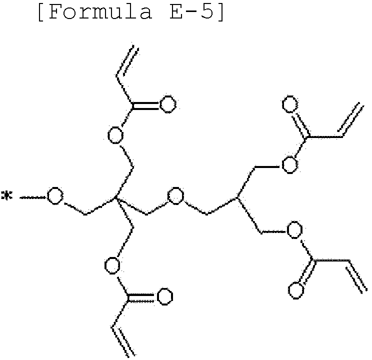

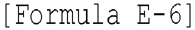

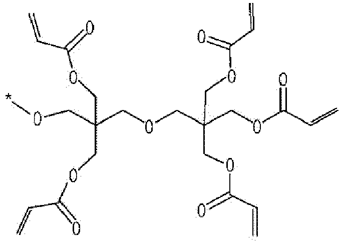

In an embodiment of the present invention, the polyalkylene carbonate-based first polymer may be represented by Formula 3-1 or Formula 3-2 below, and preferably, may be represented by Formula 3-2 below.

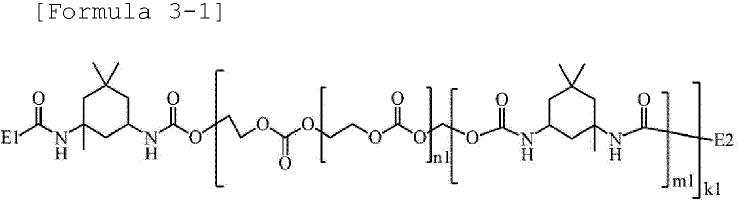

In the Formula 3-1,
n1, m1, and k1 are repetition numbers, wherein
n1 is an integer of any one of 1 to 1,000,
m1 is an integer of any one of 1 to 1,000, and
k1 is an integer of any one of 1 to 100, and
E1 and E2 are the same as or different from each other and are each independently an alkyl group, an alkoxy group, a hydroxyl group, an aldehyde group, an ester group, a halogen group, a halide group, a vinyl group, a (meth)acrylate group, a carboxyl group, a phenyl group, an amine group, an amide group, or a sulfonyl group.

Specifically, the E1 and E2 may each be a vinyl group or a (meth)acrylate group, and more specifically, a (meth)acrylate group.

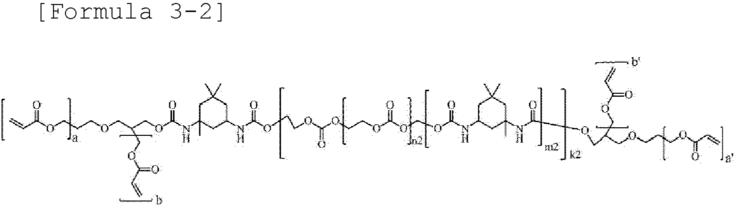

In the Formula 3-2,
n2, m2, and k2 are repetition numbers, wherein
n2 is an integer of any one of 1 to 1,000,
m2 is an integer of any one of 1 to 1,000, and
k2 is an integer of any one of 1 to 100, and
a and a' are the same as or different from each other and are each independently an integer of 1 or 2, and
b and b' are the same as or different from each other and are each independently an integer of any one of 1 to 3.

In an embodiment of the present invention, the Formula 3-1 above may be represented by Formula 3-A below.

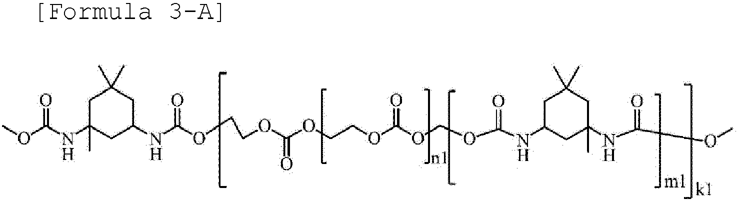

In the Formula 3-A,
definitions of n1, m1, and k1 are the same as defined in Formula 3-1 above.

In an embodiment of the present invention, the Formula 3-2 above may be represented by Formula 3-B below.

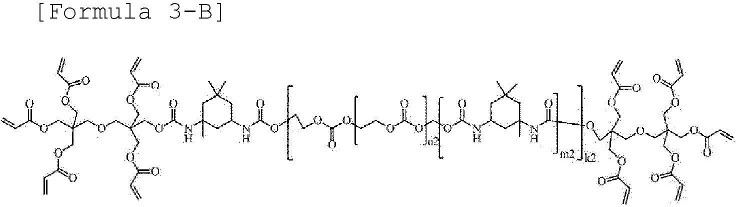

In the Formula 3-B,
definitions of n2, m2, and k2 are the same as defined in Formula 3-2 above.

In an embodiment of the present invention, the weight average molecular weight of the polyalkylene carbonate-based first polymer may be 1,000 g/mol to 1,500,000 g/mol, preferably 2,000 g/mol to 1,000,000 g/mol, and most preferably 2,000 g/mol to 10,000 g/mol. When the weight average molecular weight of the first polymer is less than 1,000 g/mol, the affinity between a polymer and an electrode decreases, and the mechanical properties of a film derived from the polymer are degraded, and when greater than 1,500,000 g/mol, there is a problem in that it is difficult to be dissolved in an electrolyte solvent.

### (b) Second polymer

In an embodiment of the present invention, the composition for an electrolyte includes a unit represented by Formula 2 below, and a polypropylene carbonate(PPC)-based second polymer having a weight average molecular weight of 200 g/mol to 1,000 g/mol.

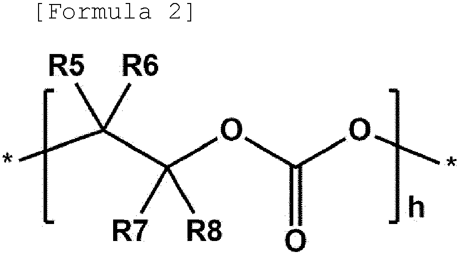

In the Formula 2,
R5 to R8 are the same as or different from each other and are each independently hydrogen, or an alkyl group having 1 to 5 carbon atoms, and at least one of R5 to R8 is an alkyl group having 1 to 5 carbon atoms,
* is a site connected to a main chain or an end group of a polymer, and
h is a repetition number and an integer of any one of 1 to 200.

The weight average molecular weight of the second polymer is in a range of 1/3,000 to 1/3 of the weight average molecular weight of the first polymer, preferably 1/1,000 to 1/4, and more preferably 1/100 to 1/5.

When the weight average molecular weight of the second polymer is in the above range, it is preferable in that it is easy to form a Semi-IPN structure between the first polymer and the second polymer which have different molecular weights, and in that a polymer matrix may be appropriately dispersed.

When the weight average molecular weight of the second polymer is less than 1/3,000 of the weight average molecular weight of the first polymer, the affinity with the first polymer is low, so that it is difficult to sufficiently obtain an effect due to the introduction of the second polymer, and when greater than 1/3, the ability to disperse the first polymer is insufficient, so that it is difficult to form an appropriate structure.

The second polymer acts as a diluent during a polymer polymerization process, and thus, should have more flexible properties to be mixed well with the first polymer, so that it is preferable that at least one of R5 to R8 is an alkyl group compared to all thereof being hydrogen in Formula 2 above, in which case there is an effect of improving the mechanical physical properties of a polymer network structure.

Preferably, R5 to R7 of Formula 2 above may each be hydrogen, and R8 may be a methyl group.

In addition, preferably, the h may be an integer of any one of 1 to 100, and more preferably, the h may be an integer of any one of 3 to 10.

In an embodiment of the present invention, the second polymer may include a unit represented by Formula 4 below.

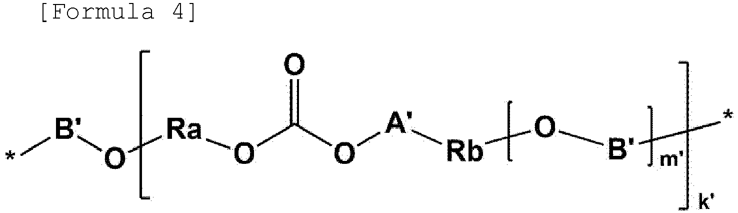

In the Formula 4,
Ra and Rb are the same as or different from each other and are each independently an alkylene group having 1 to 5 carbon atoms,
A' is a unit represented by Formula 2 above,
B' is a unit including one or more amide groups,
* is a site connected to a main chain or an end group of a polymer, and
m' and k' are repetition numbers, wherein
m' is an integer of any one of 1 to 300, and
K' is an integer of any one of 1 to 30.

The amide group means a group represented by

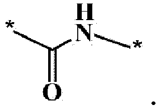

Both end groups of the second polymer of the present invention are the same as or different from each other, and although not particularly limited, may be, for example, each independently an alkyl group, an alkoxy group, a hydroxyl group, an aldehyde group, an ester group, a halogen group, a halide group, a vinyl group, a (meth)acrylate group, a carboxyl group, a phenyl group, an amine group, an amide group, or a sulfonyl group. Specifically, the end group is an alkyl group having 1 to 5 carbon atoms.

In an embodiment of the present invention, the amount of the second polymer may be in a range of 0.01 wt% to 50 wt%, preferably 0.02 wt% to 40 wt%, more preferably 0.05 wt% to 30 wt% based on the total weight of the first polymer. When the amount of the second polymer compared to the first polymer is less than 0.01 wt%, an influence due to the introduction of the second polymer is insignificant, so that it is difficult to expect an effect, and when greater than 50 wt%, the formation of the network structure of a polymer is inhibited, so that there is a problem in that the functionality of an electrolyte is rater degraded.

### (c) Additive

The composition for an electrolyte of a lithium secondary battery of the present invention may optionally include the following additives, if necessary, in order to prevent an electrolyte from decomposing in a high-voltage environment, thereby causing electrode collapse, or to further improve low-temperature high-rate discharge properties, high-temperature stability, overcharge prevention, the effect of suppressing battery expansion at high temperatures, and the like.

The additive may be one or more selected from a carbonate-based compound, a halogen-substituted carbonate-based compound, a sultone-based compound, a sulfate-based compound, a phosphate-based compound, a borate-based compound, a nitrile-based compound, an amine-based compound, a silane-based compound, a benzene-based compound, and a lithium salt-based compound.

The carbonate-based compound may be one or more selected from vinylene carbonate (VC) and vinylethylene carbonate (VEC), and specifically, may be vinylene carbonate.

The halogen-substituted carbonate-based compound may be fluoroethylene carbonate (FEC).

The sultone-based compound is a material capable of forming a stable SEI film by a reduction reaction on the surface of a negative electrode, and may be one or more compounds selected from 1,3-propane sultone (PS), 1,4-butane sultone, ethene sul tone, 1,3-propene sultone (PRS), 1,4-butene sultone, and 1-methyl-1,3-propene sultone, and specifically, may be 1,3-propane sultone (PS).

The sulfate-based compound is a material which may be electrically decomposed on the surface of a negative electrode, thereby forming a stable SEI thin film which is not cracked even during high-temperature storage, and may be one or more selected from ethylene sulfate (Esa), trimethylene sulfate (TMS), or methyl trimethylene sulfate (MTMS) .

The phosphate-based or phosphite-based compound may be one or more selected from lithium difluoro(bisoxalato)phosphate, lithium difluorophosphate, tris(trimethyl silyl)phosphate, tris(trimethyl silyl)phosphite, tris(2,2,2-trifluoroethyl)phosphate, and tris(trifluoroethyl)phosphite.

The nitrile-based compound may be one or more selected from succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The amine-based compound may be one or more selected from triethanolamine and ethylenediamine, and the silane-based compound may be tetravinylsilane.

The benzene-based compound may be one or more selected from monofluorobenzene, difluorobenzene, trifluorobenzene, and tetrafluorobenzene.

The lithium salt-based compound is a compound different from a lithium salt included in the electrolyte, and may be one or more compounds selected from LiPO₂F₂, lithium bisoxalatoborate (LiB(C₂O₄)₂) (LiBOB), lithium tetrafluoroborate (LiBF₄), and lithium tetraphenylborate.

Meanwhile, the amount of the additive may be in a range of 0.1 wt% to 10 wt%, preferably 1 wt% to 5 wt%, based on the total weight of the composition. When the amount of the additive is less than 0.1 wt%, the effect of improving the low-temperature capacity of a battery as well as the high-temperature storage properties and high-temperature lifespan properties of the same is insignificant, and when greater than 10 wt%, there is a possibility in that side reactions in an electrolyte may excessively occur during charging and discharging of the battery. Particularly, when additives for forming the SEI film are added in excess, the additives may not be sufficiently decomposed at a high temperature, and thus, may be present as unreacted substances or precipitated in an electrolyte at room temperature. Accordingly, a side reaction causing the lifespan or resistance properties of the battery to degrade may occur.

### (d) Organic solvent

As the organic solvent, various organic solvents typically used in a lithium electrolyte may be used without limitation. For example, the organic solvent may include one or more selected from a cyclic carbonate-based solvent, a linear carbonate-based solvent, a cyclic carbonate-based solvent, a linear ester-based solvent, and a nitrile-based solvent, and preferably, may include a cyclic carbonate-based solvent and a linear ester-based solvent. When a cyclic carbonate-based solvent and a linear ester-based solvent are used together, it is preferable in that a suitable solvation sheath is formed in the process of dissociating lithium ions, thereby facilitating the dissociation of a lithium salt, the viscosity of an electrolyte decreases, thereby improving ion conductivity properties, and low-temperature ion conductivity increases, thereby improving low-temperature output properties and also increasing the stability at a high voltage, so that it is possible to improve battery lifespan.

The cyclic carbonate-based solvent is a high-viscosity organic solvent having a high dielectric constant, and thus, may dissociate a lithium salt well in an electrolyte, and may be one or more selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate. Among the above, in terms of ensuring high ion conductivity, ethylene carbonate (EC) and propylene carbonate (PC) may be included.

In addition, the linear carbonate-based solvent is a low-viscosity, low-dielectric constant organic solvent, and representative examples thereof may be one or more organic solvents selected from dimethyl carbonate (DMC), diethyl carbonate (DEC), dipropyl carbonate, ethylmethyl carbonate (EMC), methylpropyl carbonate, and ethylpropyl carbonate, and specifically, may include ethylmethyl carbonate (EMC).

The linear ester-based solvent may be at least one selected from the group consisting of methyl acetate, ethyl acetate, propyl acetate, methyl propionate (MP), ethyl propionate (EP), propyl propionate (PP), and butyl propionate (BP) and, specifically, may include ethyl propionate (EP) and propyl propionate (PP).

In addition, as the cyclic ester-based solvent, one or more selected from γ-butyrolactone, γ-valerolactone, γ-caprolactone, σ-valerolactone, and ε-caprolactone may be used.

When the linear ester-based solvent and/or the cyclic ester-based solvent are included as the organic solvent of the composition for an electrolyte, the stability may increase at high temperatures.

The nitrile-based solvent may be one or more selected from succinonitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, and preferably, may be succinonitrile.

The remainder of the total weight of the composition for an electrolyte of a lithium secondary battery except for other components, for example, the lithium salt, the first polymer, the second polymer, the additive, and a polymerization initiator to be described later, other than the organic solvent, may all be the organic solvent unless otherwise stated.

### (e) Lithium salt

As the lithium salt, any lithium salt typically used in an electrolyte for a lithium secondary battery may be used without imitation, and for example, a lithium salt including Li⁺ as a positive ion, and including one or more selected from F⁻, Cl⁻, Br⁻, I⁻, NO₃⁻, N(CN)₂⁻, BF₄⁻, ClO₄⁻, B₁₀Cl₁₀⁻, AlCl₄⁻, AlO₄⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, BF₂C₂O₄CHF-, PF₄C₂O₄⁻, PF₂C₄O₈⁻, PO₂F₂⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃) ₂CO⁻, (CF₃SO₂)₂CH⁻, CF₃(CF₂)₇SO₃⁻, and SCN⁻ as a negative ion may be used.

Specifically, the lithium salt may be one or more selected from LiPF₆, LiClO₄, LiBF₄, lithium bis(fluorosulfonyl)imide (LiFSI), lithium bis (trifluoromethanesulfonyl) imide (LiTFSI), LiSO₃CF₃, LiPO₂F₂, lithium bis(oxalate)borate (LiBOB), lithium difluoro(oxalate)borate (LiDFOB), lithium difluoro(bisoxalato) phosphate (LiDFBP), lithium tetrafluoro(oxalate) phosphate (LiTFOP), and lithium fluoromalonato(difluoro) borate (LiFMDFB), and preferably, may be LiPF₆.

In an embodiment of the present invention, the concentration of the lithium salt in the composition for an electrolyte may be 0.1 M to 4.0 M, specifically 0.5 M to 3.0 M, and more specifically 0.8 M to 2.5 M. When the concentration of a lithium salt is in the above range, an effect of improving low-temperature output and improving cycle properties is sufficiently secured, and viscosity and surface tension are prevented from being excessively increased, so that suitable electrolyte impregnation properties may be obtained.

### (f) Polymerization initiator

The electrolyte for a lithium secondary battery of the present invention may further include a typical polymerization initiator known in the art, for example, one or more polymerization initiators selected from an azo-based compound and a peroxide-based compound. The polymerization initiator is to initiate a polymerization reaction of the first polymer and the second polymer of the present invention.

The azo-based compound may be one or more selected from 2,2'-Aazobis(2-cyanobutane), dimethyl 2,2'-Azobis(2-methylpropionate), 2,2'-Azobis(methylbutyronitrile), 2,2'-Azobis(iso-butyronitrile) (AIBN), and 2,2'-AzobisdimethylValeronitrile (AMVN), but is not limited thereto.

The peroxide-based compound may be one or more selected from benzoyl peroxide, acetyl peroxide, dilauryl peroxide, di-tert-butyl peroxide, t-butyl peroxy-2-ethylhexanoate, cumyl hydroperoxide, and hydrogen peroxide, but is not limited thereto.

The polymerization initiator may be decomposed by heat, a non-limiting example thereof may be heat of 30°C to 100°C, or decomposed at room temperature (5°C to 30°C) to form a radical, and by free radial polymerization, the first polymer and the second polymer may be reacted with an acrylate-based end group to form a gel polymer electrolyte.

The polymerization initiator may be included in an amount of 0.1 parts by weight to 5 parts by weight based on 100 parts by weight of the first polymer and the second polymer. When the polymerization initiator is included in the above range, an amount of residual unreacted polymerization initiator may be minimized, and gelation may be achieved above a predetermined level.

### Gel polymer electrolyte

The present invention provides a gel polymer electrolyte for a lithium secondary battery including a polymerization product of the composition for an electrolyte of a lithium secondary battery, and specifically, the gel polymer electrolyte may be the polymerization product of the composition for an electrolyte. That is, the gel polymer electrolyte may include a polymer network formed by a polymerization reaction of the composition for an electrolyte. Specifically, the gel polymer electrolyte may be manufactured by injecting the composition for an electrolyte into a secondary battery and then curing the same by a thermal polymerization reaction. For example, the gel polymer electrolyte may be formed by in-situ polymerization of the composition for an electrolyte inside the secondary battery.

More specifically, the gel polymer electrolyte may be manufactured by
(a) inserting an electrode assembly composed of a positive electrode, a negative electrode, and a separator interposed between the positive electrode and the negative electrode into a battery case,
(b) injecting the composition of the present invention into the battery case,
(c) wetting and aging the electrode assembly, and
(d) polymerizing the composition to form a gel polymer electrolyte.

At this time, the in-situ polymerization reaction in the lithium secondary battery may be performed through an E-BEAM, gamma ray, a room-temperature/high-temperature aging process, and may be performed through thermal polymerization according to an embodiment of the present invention. At this time, the polymerization takes about 2 minutes to 24 hours, and the thermal polymerization temperature may be 50°C to 100°C, specifically 60°C to 80°C.

More specifically, the gel polymer electrolyte of the present invention may be manufactured by injecting the composition for an electrolyte into a battery cell, followed by sealing the injection port, and performing thermal polymerization of heating at about 60°C to 80°C for an hour to 20 hours.

### Lithium secondary battery

Next, a lithium secondary battery according to the present invention will be described.

The lithium secondary battery according to the present invention includes a positive electrode including a positive electrode active material, a negative electrode including a negative electrode active material, a separator interposed between the positive electrode and the negative electrode, and the gel polymer electrolyte for a lithium secondary battery described above. The gel polymer electrolyte has been described above, and thus, the description thereof will be omitted, and hereinafter, the other components will be described.

### (a) Positive electrode

The positive electrode may be manufactured by coating a positive electrode mixture slurry including a positive electrode active material, a binder, a conductive material, a solvent, and the like on a positive electrode current collector.

The positive electrode current collector is not particularly limited as long as it has conductivity without causing a chemical change in the battery. For example, stainless steel, aluminum, nickel, titanium, fired carbon, or aluminum or stainless steel that is surface-treated with one of carbon, nickel, titanium, silver, and the like may be used.

The positive electrode active material is a compound capable of reversible intercalation and de-intercalation of lithium, and may be one or more selected from the group consisting of LCO(LiCoO₂), LNO(LiNiO₂), LMO(LiMnO₂), LiMn₂O₄, LiCoPO₄, LFP(LiFePO₄), and LiNi_{1-x-y-z}CoₓM¹_{y}M²_{z}O₂ (M¹ and M² are each independently any one selected from the group consisting of Al, Ni, Co, Fe, Mn, V, Cr, Ti, W, Ta, Mg, and Mo, and x, y and z are each independently an atomic fraction of an oxide composition element, wherein 0≤x<0.5, 0≤y<0.5, 0≤z<0.5, and x+y+z=1) including LiNiMnCoO₂, LiNiCoMnO₂ (NMC), and the like.

Specifically, the positive electrode active material may include a lithium metal oxide containing one or more metals such as cobalt, manganese, nickel, or aluminum and lithium.

More specifically, the lithium metal oxide may be a lithium-manganese-based oxide such as LiMnO₂, LiMnO₃, LiMn₂O₃, and LiMn₂O₄, a lithium-cobalt-based oxide such as LiCoO₂, a lithium-nickel-based oxide such as LiNiO₂, a lithium-nickel-manganese-based oxide such as LiNi_{1-Y}Mn_{Y}O₂ (0<Y<1), LiMn_{2-z}Ni_{z}O₄ (0<Z<2), a lithium-nickel-cobalt-based oxide such as LiNi_{1-Y1}Co_{Y1}O₂ (0<Y1<1), a lithium-manganese-cobalt-based oxide such as LiCo_{1-Y2}Mn_{Y2}O₂ (0<Y2<1) and LiMn_{2-z1}Co_{z1}O₄ (0<z1<2), a lithium-nickel-manganese-cobalt-based oxide such as Li(NiₚCo_{q}Mnᵣ₁)O₂ (0<p<1, 0<q<1, 0<r1<1, p+q+r1=1) and Li(Niₚ₁Co_{q1}Mnᵣ₂)O₄ (0<p1<2, 0<q1<2, 0<r2<2, p1+q1+r2=2), and a lithium-nickel-cobalt-transition metal (M) oxide such as Li (Niₚ₂Co_{q2}Mnᵣ₃M_{S2})O₂ (wherein M is selected from the group consisting of Al, Fe, V, Cr, Ti, Ta, Mg, and Mo, and p2, q2, r3, and S2 are each an atomic fraction of independent elements, wherein 0<p2<1, 0<q2<1, 0<r3<1, 0<S2<1, p2+q2+r3+S2=1) .

Among these, due to the fact that the capacity and stability of a battery may be increased, the lithium metal oxide may be LiCoO₂, LiMnO₂, LiNiO₂, a lithium nickel-manganese-cobalt oxide (e.g., Li(Ni_{1/3}Mn_{1/3}Co_{1/3})O₂, Li(Ni_{0.6}Mn_{0.2}Co_{0.2})O₂, Li (Ni_{0.5}Mn_{0.3}Co_{0.2})O₂, Li(Ni_{0.7}Mn_{0.15}Co_{0.15})O₂, Li(Ni_{0.8}Mn_{0.1}Co_{0.1})O₂, etc.), or a lithium nickel cobalt aluminum oxide (e.g., Li(Ni_{0.8}Co_{0.15}Al_{0.05})O₂, etc.). When considering the effect of remarkable improvement according to the type and content ratio control of constituent elements forming a lithium metal oxide, the lithium metal oxide may be one or more selected from Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂.

The positive electrode active material may be included in an amount of 60 wt% to 99 wt%, preferably 70 wt% to 99 wt%, and more preferably 80 wt% to 99 wt% based on the total weight of solids excluding the solvent in the positive electrode mixture slurry.

The binder is a component for assisting in coupling between an active material and a conductive material, and coupling to a current collector.

Examples of the binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene (PE), polypropylene, an ethylene-propylene-diene monomer, a sulfonated ethylene-propylene-diene monomer, styrene-butadiene rubber (SBR), fluorine rubber, and various copolymers thereof.

Typically, the binder may be included in an amount of 1 wt% to 20 wt%, preferably 1 wt% to 15 wt%, and more preferably 1 wt% to 10 wt% based on the total weight of solids excluding the solvent in the positive electrode mixture slurry.

The conductive material is a component for further improving the conductivity of a positive electrode active material.

The conductive material is not particularly limited as long as it has conductivity without causing a chemical change in the battery, and for example, graphite; carbon black such as acetylene black, Ketjen black, channel black, furnace black, lamp black, and thermal black; conductive fiber such as carbon fiber and metal fiber; metal powder such as fluorocarbon powder, aluminum powder, and nickel powder; a conductive whisker such as zinc oxide and potassium titanate; a conductive metal oxide such as titanium oxide; and a conductive material such as a polyphenylene derivative may be used.

Typically, the conductive material may be included in an amount of 1 wt% to 20 wt%, preferably 1 wt% to 15 wt%, and more preferably 1 wt% to 10 wt% based on the total weight of solids excluding the solvent in the positive electrode mixture slurry.

The solvent may include an organic solvent such as N-methyl-2-pyrrolidone (NMP), and may be used in an amount such that a preferred viscosity is achieved when the positive electrode active material, and optionally, a binder, a conductive material, and the like are included. For example, the solvent may be included in an amount such that the concentration of solids including the positive electrode active material, and optionally, a binder and a conductive material, is in a range of 50 wt% to 95 wt%, preferably 50 wt% to 80 wt%, more preferably 55 wt% to 70 wt%.

### (b) Negative electrode

The negative electrode may be prepared by coating a negative electrode slurry including a negative electrode active material, a binder, a conductive material, a solvent, and the like on a negative electrode current collector, followed by drying and roll-pressing.

The negative electrode current collector typically has a thickness of 3 um to 500 um. The negative electrode current collector is not particularly limited as long as it has high conductivity without causing a chemical change in the battery, and for example, copper; stainless steel; aluminum; nickel; titanium; fired carbon, copper or stainless steel that is surface-treated with one of carbon, nickel, titanium, silver, and the like, an aluminum-cadmium alloy, or the like may be used. Also, as in the case of the positive electrode current collector, microscopic irregularities may be formed on the surface of the negative electrode current collector to improve the coupling force of a negative electrode active material, and the negative electrode current collector may be used in various forms of such as a film, a sheet, a foil, a net, a porous body, a foam body, and a non-woven fabric body.

In addition, the negative electrode active material may include one or more selected from the group consisting of a lithium metal, a carbon material capable of reversible intercalation/de-intercalation of lithium ions, a metal or an alloy of the metal and lithium, a metal composite oxide, a material capable of doping and undoping lithium, and a transition metal oxide.

As the carbon material capable of reversible intercalation/de-intercalation of lithium ions, a carbon-based negative electrode active material commonly used in a lithium ion secondary battery may be used without particular limitation, and representative examples thereof may include a crystalline carbon, an amorphous carbon, or a combination thereof. Examples of the crystalline carbon may include graphite such as an irregular, planar, flaky, spherical, or fibrous natural graphite or artificial graphite, and examples of the amorphous carbon may include soft carbon (low-temperature fired carbon) or hard carbon, mezophase pitch carbides, fired cokes, and the like.

As the metal or the alloy of the metal and lithium, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of the metal and lithium may be used.

As the metal composite oxide, one selected from the group consisting of PbO, PbO₂, Pb₂O₃, Pb₃O₄, Sb₃O₃, Sb₂O₄, Sb₂O₃, GeO, GeO₂, Bi₂O₃, Bi₂O₄, Bi₂O₅, LiₓFe₂O₃ (0≤X≤1), LiₓWO₂ (0≤X≤1), and SnₓMe_{1-X} Me'_{Y}O_{z} (Me: Mn, Fe, Pb, Ge; Me': Al, B, P, Si, an element each in Group 1, Group 2, and Group 3 of the periodic table, halogen; 0<X≤1; 1≤Y≤3; 1≤z≤8) may be used.

The material capable of doping and undoping lithium may be Si, SiOₓ(0<x≤2), an Si-Y alloy (wherein Y is an element selected from the group consisting of an alkali metal, an alkaline earth metal, a Group 13 element, a Group 14 element, a transition metal, a rare earth element, and a combination thereof, but not Si), Sn, SnO₂, Sn-Y (wherein Y is an element selected from the group consisting of an alkali metal, an alkaline earth metal, a Group 13 element, a Group 14 element, a transition metal, a rare earth element, and a combination thereof, but not Sn), and the like, or at least one thereof may be mixed with SiO₂ and used. The element Y may be selected from the group consisting of Mg, Ca, Sr, Ba, Ra, Sc, Y, Ti, Zr, Hf, Rf, V, Nb, Ta, Db (dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may be a lithium-containing titanium composite oxide (LTO), a vanadium oxide, a lithium vanadium oxide, and the like.

In the present invention, the negative electrode active material is preferably graphite.

The negative electrode active material may be included in an amount of 60 wt% to 99 wt%, preferably 70 wt% to 99 wt%, and more preferably 80 wt% to 99 wt% based on the total weight of solids excluding the solvent in a negative electrode mixture slurry.

The binder is a component for assisting in coupling between a conductive material, an active material, and a current collector. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer, a sulfonated ethylene-propylene-diene monomer, styrene-butadiene rubber (SBR), fluorine rubber, and various copolymers thereof.

Typically, the binder may be included in an amount of 1 wt% to 20 wt%, preferably 1 wt% to 15 wt%, and more preferably 1 wt% to 10 wt% based on the total weight of solids excluding the solvent in the negative electrode mixture slurry.

The conductive material is a component for further improving the conductivity of a negative electrode active material. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; conductive fiber such as carbon fiber and metal fiber; metal powder such as fluorocarbon powder, aluminum powder, and nickel powder; a conductive whisker such as zinc oxide and potassium titanate; a conductive metal oxide such as titanium oxide; and a conductive material such as a polyphenylene derivative may be used.

The conductive material may be included in an amount of 1 wt% to 20 wt%, preferably 1 wt% to 15 wt%, and more preferably 1 wt% to 10 wt% based on the total weight of solids excluding the solvent in the negative electrode mixture slurry.

The solvent may include water; or an organic solvent such as N-methyl-2-pyrrolidone (NMP), and may be used in an amount such that a preferred viscosity is achieved when the negative electrode active material, and optionally, a binder, a conductive material, and the like are included. For example, the solvent may be included in an amount such that the concentration of solids including the negative electrode active material, and optionally, a binder and a conductive material, is 50 wt% to 95 wt%, preferably 70 wt% to 90 wt%.

When a metal itself is used as the negative electrode, the negative electrode may be manufactured by physically bonding, roll-pressing, or depositing a metal on a metal thin film itself or the negative electrode current collector. The depositing method may be electrical vapor deposition or chemical vapor deposition.

For example, the metal bonded/roll-pressed/deposited on the metal thin film itself or the negative electrode current collector may be one type of metal selected from the group consisting of nickel (Ni), tin (Sn), copper (Cu), and indium (In), or an alloy of two types of metals thereof.

### (c) Separator

The lithium secondary battery according to the present invention includes a separator between the positive electrode and the negative electrode.

The separator is to separate the negative electrode and the positive electrode and to provide a movement path for lithium ions, and any separator may be used without particular limitation as long as it is a separator commonly used in a secondary battery. Particularly, a separator having excellent electrolyte impregnation as well as low resistance to ion movement in the electrolyte is preferable.

Specifically, as the separator, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a separator including or coated with a ceramic component or a polymer material in the form of a film, fiber, or powder may be used to secure heat resistance or mechanical strength, and may be used in a single-layered or a multi-layered structure.

The lithium secondary battery according to the present invention as described above may be usefully used in portable devices such as a mobile phone, a notebook computer, and a digital camera, and in electric cars such as a hybrid electric vehicle (HEV).

Accordingly, according to another embodiment of the present invention, a battery module including the lithium secondary battery as a unit cell, and a battery pack including the battery module are provided.

The battery module or the battery pack may be used as a power source of one or more medium-and-large-sized devices, for example, a power tool, an electric car including an electric vehicle (EV), a hybrid electric vehicle, and a plug-in hybrid electric vehicle (PHEV), and a power storage system.

The external shape of the lithium secondary battery of the present invention is not particularly limited, but may be a cylindrical shape using a can, a square shape, a pouch shape, a coin shape, or the like.

The lithium secondary battery according to the present invention may be used in a battery cell which is used as a power source for a small-sized device, and may also be preferably used as a unit cell in a medium-and-large-sized battery module including a plurality of battery cells.

Hereinafter, the present invention will be described in detail with reference to specific examples.

### MODE FOR CARRYING OUT THE INVENTION

### <Examples: Manufacturing of lithium secondary battery>

### Example 1.

### (1) Preparation of composition for electrolyte

LiPF₆ of 1.0 M, 5 wt% of a first polymer (Mw: 3,000 g/mol, n2=10, m2=10, k2=2) represented by Formula 3-B below, 0.0025 wt% (0.05 wt% based on the first polymer) of a PPC-based second polymer (Mw: 600 g/mol, h=5-6) represented by Formula P2 below, 0.4 wt% of 2,2'-Azobis(2,4-dimethylvaleronitrile) (V-65, Wako Co., Ltd.), and the remainder of an organic solvent were mixed to prepare a total of 100 wt% of a composition for an electrolyte. At this time, as the organic solvent, a mixed non-aqueous organic solvent including ethylene carbonate (EC):propylene carbonate (PC):ethyl propionate (EP):propyl propionate (PP) at a volume ratio of 20:10:25:45 was used.

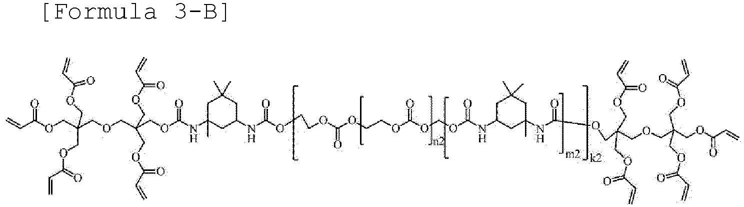

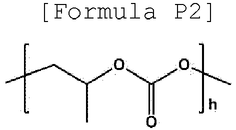

### (2) Manufacturing of lithium secondary battery

To a N-methyl-2-pyrrolidone (NMP) solvent, LiCoO₂ as a positive electrode active material, carbon black as a conductive material, and polyvinylidene fluoride (PVdF) as a binder were respectively added in an amount of 96 parts by weight, 2 parts by weight, and 2 parts by weight to prepare a positive electrode mixed slurry. The positive electrode mixed slurry was applied to an aluminum (Al) thin film having a thickness of about 20 µm, which is a positive electrode current collector, dried and then roll pressed to manufacture a positive electrode.

Graphite as a negative electrode active material, styrene-butadiene rubber (SBR) as a binder, CMC as a thickener, and carbon black as a conductive material were mixed at a weight ratio of 96.3:1:1.5:1.2, and then added to the NMP solvent to prepare a negative electrode mixture slurry. The negative electrode mixture slurry was applied on a copper (Cu) thin film having a thickness of about 10 µm, which is a negative electrode current collector, dried and then roll pressed to manufacture a negative electrode.

The positive electrode, the negative electrode, and a separator composed of 3 layers of polypropylene/polyethylene/polypropylene (PP/PE/PP) were used to manufacture an electrode assembly, and then electrode assembly was placed in a case, followed by injecting 120 mL of the above-prepared composition for an electrolyte to the case, sealing the case, and then performing aging for 2 days. Thereafter, by performing curing at 60°C for 5 hours, thereby performing a thermal polymerization reaction, a pouch-type lithium secondary battery including the gel polymer electrolyte was manufactured.

### Example 2.

A lithium secondary battery was manufactured in the same manner as in Example 1 except that in the preparation process of the composition for an electrolyte of Example 1, the amount of the second polymer was changed to 20 wt% based on the total amount of the first polymer.

### Example 3.

A lithium secondary battery was manufactured in the same manner as in Example 1 except that in the preparation process of the composition for an electrolyte of Example 1, the amount of the first polymer was changed to 0.5 wt% based on the total amount of the composition, and the amount of the second polymer was changed to 0.5 wt% based on the total amount of the first polymer.

### Example 4.

A lithium secondary battery was manufactured in the same manner as in Example 1 except that in the preparation process of the composition for an electrolyte of Example 1, the amount of the first polymer was changed to 30 wt% based on the total amount of the composition, and the amount of the second polymer was changed to 0.5 wt% based on the total amount of the first polymer.

### Comparative Example 1.

A lithium secondary battery was manufactured in the same manner as in Example 1 except that in the preparation process of the composition for an electrolyte of Example 1, the first polymer and the second polymer were not included.

### Comparative Example 2.

A lithium secondary battery was manufactured in the same manner as in Example 1 except that in the preparation process of the composition for an electrolyte of Example 1, the second polymer was not included.

### Comparative Example 3.

A lithium secondary battery was manufactured in the same manner as in Example 1 except that in the preparation process of the composition for an electrolyte of Example 1, the amount of the first polymer was changed to 0.05 wt% based on the total amount of the composition, and the amount of the second polymer was changed to 20 wt% based on the total amount of the first polymer.

### Comparative Example 4.

A lithium secondary battery was manufactured in the same manner as in Example 1 except that in the preparation process of the composition for an electrolyte of Example 1, the amount of the first polymer was changed to 40 wt% based on the total amount of the composition, and the amount of the second polymer was changed to 0.5 wt% based on the total amount of the first polymer.

### Comparative Example 5.

A lithium secondary battery was manufactured in the same manner as in Example 2 except that in the preparation process of the composition for an electrolyte of Example 2, a polymer (Mw=2,000 g/mol, h=17-18) represented by Formula P2 was used as the second polymer.

### Comparative Example 6.

The same was performed in the same manner as in Example 1 except that in the preparation process of the composition for an electrolyte of Example 1, a first polymer (n2=10, m2=10, k2=1,000) represented by Formula 3-B above having a weight average molecular weight (Mw) of 2,000,000 g/mol was used as the first polymer, and the amount of the second polymer was changed to 0.5 wt% based on the total amount of the first polymer, but the first polymer was not dissolved, so that it was not possible to manufacture an electrolyte.

### Comparative Example 7.

A lithium secondary battery was manufactured in the same manner as in Example 1 except that in the preparation process of the composition for an electrolyte of Example 1, a polymer (Mw=117 g/mol, h=1) represented by Formula P2 was used as the second polymer.

### <Experimental Examples>

### Experimental Example 1: Thermal safety evaluation

The lithium secondary batteries prepared in Examples and Comparative Examples were heated to 150°C at a temperature raising rate of 5°C/min in a full-charged state of SOC 1000 (4.45V), and then each thereof was left to stand for one hour to conduct a hot box evaluation experiment to determine whether ignition occurred.

The results are shown in Table 1 below, and when the battery was ignited, it was denoted by FAIL, when not ignited, it was denoted by PASS.

### Experimental Example 2: Discharge capacity and initial efficiency evaluation

For each of the lithium secondary batteries of Examples and Comparative Examples, a formation process was performed by charging up to SOC 30% for 3 hours at a rate of 0.1 C at 25 °C, and then a degas process was performed after 24 hours of aging. The degassed lithium secondary batteries were charged to 4.45 V at a rate of 0.1 C at 25°C under the condition of constant current-constant voltage (CC-CV), and then discharged to 3.0 V at a rate of 0.1 C under the condition of CC. The above charging and discharging was set to one cycle, and two cycles of initial charging and discharging was performed.

The discharge capacity and initial efficiency (= discharge capacity/charge capacity×100) at this time are shown in Table 1 below.

**[Table 1]**

| | First polymer | | Second polymer | | Experim ental Example 1 | Experimental Example 2 | |
|---|---|---|---|---|---|---|---|
| | Molecular weight (g/mol) | Amount in compositi on (wt%) | Molecula r weight (g/mol) | Amount with respect to first polymer (wt%) | Thermal safety evaluat ion results | Discharge capacity (mAh) | Initial efficiency |
| Example 1 | 3,000 | 5 | 600 | 0.05 | PASS | 2.97 | 97 |
| Example 2 | 3,000 | 5 | 600 | 20 | PASS | 3.02 | 97 |
| Example 3 | 3,000 | 0.5 | 600 | 0.5 | PASS | 3.01 | 96 |
| Example 4 | 3,000 | 30 | 600 | 0.5 | PASS | 2.95 | 95 |
| Compara tive Example 1 | - | - | - | - | FAIL | 3.01 | 90 |
| Compara tive Example 2 | 3,000 | 5 | - | - | PASS | 2.88 | 91 |
| Compara tive | 3,000 | 0.05(500p pm) | 600 | 20 | FAIL | 3.00 | 89 |
| Example 3 | | | | | | | |
| Compara tive Example 4 | 3,000 | 40 | 600 | 0.5 | Battery driving failure | | |
| Compara tive Example 5 | 3,000 | 5 | 2,000 | 20 | PASS | 2.85 | 81 |
| Compara tive Example 6 | 2,000,000 | 5 | 600 | 0.5 | Electrolyte preparation failure | | |
| Compara tive Example 7 | 3,000 | 5 | 117 | 0.05 | PASS | 2.88 | 85 |

Referring to the results of Table 1, it can be seen that when an electrolyte is manufactured by using the composition for an electrolyte including a first polymer and a second polymer in optimal amounts according to an embodiment of the present invention, there are effects of improving thermal safety, discharge capacity, and initial efficiency. Meanwhile, it can be confirmed that Comparative Example 1 which does not include either a first polymer or a second polymer is vulnerable to heat, and has low initial efficiency. In addition, it can be seen that in the case (Comparative Example 2) in which a first polymer is included but a second polymer is not included, the discharge capacity and initial efficiency are low.

As described above, in the case (Comparative Example 6) in which the molecular weight of a first polymer is too high, the first polymer is not dissolved in a solvent, so that it is impossible to prepare a composition for an electrolyte, in the case (Comparative Example 4) in which a first polymer is used in an excessive amount, it is possible to manufacture an electrolyte, but it is not possible to drive a battery, and in the case (Comparative Example 3) in which a first polymer is used in an amount that is too small, there are no effects of improving thermal safety and initial efficiency.

In addition, it can be seen that in the case (Comparative Example 5) in which the molecular weight of a second polymer is greater than 1/3 of the molecular weight of a first polymer, the dispersion of the first polymer is inhibited, so that the discharge capacity and initial efficiency are degraded. Meanwhile, it can be confirmed that in the case (Comparative Example 7) in which the molecular weight of a second polymer is less than 200 g/mol, the discharge capacity and initial efficiency are degraded due to the increase in side reactions in the battery.

In addition, even though the result of the thermal safety evaluation is shown as PASS as in the cases of Comparative Examples 2 and 5, if the discharge capacity is low, the reliability of the thermal safety evaluation may be reduced. This is because, if the discharge capacity is not properly expressed, the degree to which lithium ions are deintercalated in a positive electrode is reduced even when full-charging is performed. That is, since there is a large amount of lithium ions remaining in the positive electrode, the safety is appeared to be high.

## Claims

1. A composition for an electrolyte of a lithium secondary battery, comprising:
a lithium salt;
a polyalkylene carbonate-based first polymer having a weight average molecular weight of 1,000 g/mol to 1,500,000 g/mol;
a polypropylene carbonate-based second polymer including a unit represented by Formula 2 and having a weight average molecular weight of 200 g/mol to 1,000 g/mol; and
an organic solvent,
wherein the weight average molecular weight of the second polymer is in a range of 1/3,000 to 1/3 of the weight average molecular weight of the first polymer, and
the amount of the first polymer is in a range of 0.1 wt% to 30 wt% based on the total weight of the composition: 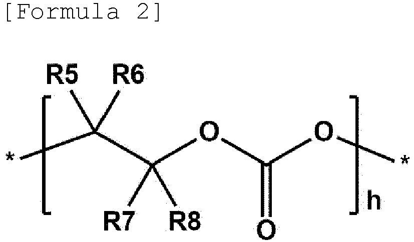
wherein in the Formula 2,
R5 to R8 are the same as or different from each other and are each independently hydrogen, or an alkyl group having 1 to 5 carbon atoms, and at least one of R5 to R8 is an alkyl group having 1 to 5 carbon atoms,
* is a site connected to a main chain or an end group of a polymer, and
h is a repetition number and an integer of any one of 1 to 200.

2. The composition of claim 1, wherein the first polymer comprises a unit represented by Formula 1: 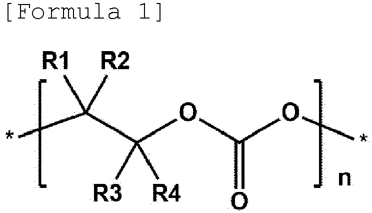 wherein in the Formula 1,
R1 to R4 are the same as or different from each other and are each independently hydrogen, or an alkyl group having 1 to 5 carbon atoms,
* is a site connected to a main chain or an end group of a polymer, and
n is a repetition number and an integer of any one of 1 to 1,000.

3. The composition of claim 2, wherein the first polymer comprises a unit represented by Formula 3: 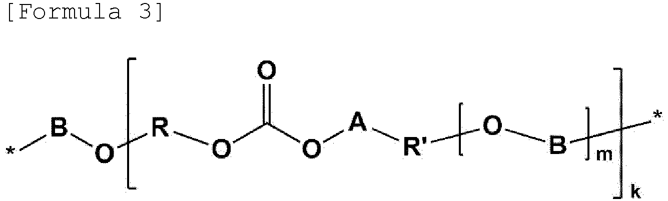 wherein in the Formula 3,
R and R' are the same as or different from each other and are each independently an alkylene group having 1 to 5 carbon atoms,
A is the unit represented by the Formula 1,
B is a unit including one or more amide groups,
* is a site connected to a main chain or an end group of a polymer, and
m and k are repetition numbers, wherein:
m is an integer of any one of 1 to 1,000; and
k is an integer of any one of 1 to 100.

4. The composition of claim 3, wherein the B is represented by Formula B-1: 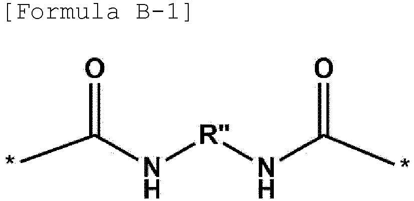 wherein in the Formula B-1,
R" is a substituted or unsubstituted alkylene group having 1 to 10 carbon atoms, a substituted or unsubstituted cycloalkylene group having 3 to 10 carbon atoms, a substituted or unsubstituted bicycloalkylene group having 6 to 20 carbon atoms, or a substituted or unsubstituted arylene group having 6 to 20 carbon atoms.

5. The composition of claim 1, wherein the first polymer is represented by Formula 3-1 or Formula 3-2: 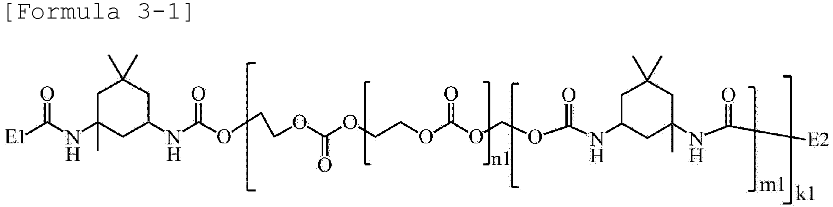 wherein in the Formula 3-1,
n1, m1, and k1 are repetition numbers, wherein:
n1 is an integer of any one of 1 to 1,000;
m1 is an integer of any one of 1 to 1,000; and
k1 is an integer of any one of 1 to 100, and
E1 and E2 are the same as or different from each other and are each independently an alkyl group, an alkoxy group, a hydroxyl group, an aldehyde group, an ester group, a halogen group, a halide group, a vinyl group, a (meth)acrylate group, a carboxyl group, a phenyl group, an amine group, an amide group, or a sulfonyl group, 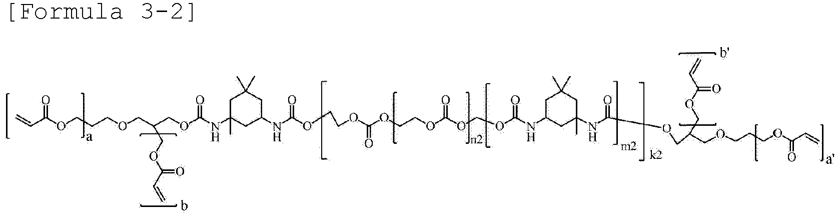
wherein in the Formula 3-2,
n2, m2, and k2 are repetition numbers, wherein:
n2 is an integer of any one of 1 to 1,000;
m2 is an integer of any one of 1 to 1,000; and
k2 is an integer of any one of 1 to 100, and
a and a' are the same as or different from each other and are each independently an integer of 1 or 2, and
b and b' are the same as or different from each other and are each independently an integer of any one of 1 to 3.

6. The composition of claim 1, wherein the weight average molecular weight of the second polymer is in a range of 1/1,000 to 1/4 of the weight average molecular weight of the first polymer.

7. The composition of claim 1, wherein the amount of the first polymer is in a range of 0.1 wt% to 20 wt% based on the total weight of the composition.

8. The composition of claim 1, wherein an amount of the second polymer is in a range of 0.01 wt% to 50 wt% based on a total weight of the first polymer.

9. The composition of claim 1, wherein an amount of the second polymer is in a range of 0.02 wt% to 40 wt% based on a total weight of the first polymer.

10. The composition of claim 1, further comprising a polymerization initiator.

11. A gel polymer electrolyte for a lithium secondary battery comprising a polymerization product of the composition of claim 1.

12. A lithium secondary battery comprising:
a positive electrode including a positive electrode active material;
a negative electrode including a negative electrode active material;
a separator interposed between the positive electrode and the negative electrode; and
the gel polymer electrolyte of claim 11.
